# EUROPEAN PATENT SPECIFICATION

(11) **EP 4 328 990 B1**
(45) Date of publication and mention of the grant of the patent: **23.09.2026**
(21) Application number: 23190623.1
(22) Date of filing: 09.08.2023
(51) Int. Cl.: H01M 4/04, H01M 4/13, H01M 10/052, H01M 10/0562, H01M 10/0585, H01M 4/139, H01M 4/02

(54) **ELECTRODE FOR BATTERY, BATTERY, AND MANUFACTURING METHOD OF ELECTRODE**
ELEKTRODE FÜR BATTERIE, BATTERIE UND HERSTELLUNGSVERFAHREN FÜR DIE ELEKTRODE
ÉLECTRODE POUR BATTERIE, BATTERIE ET PROCÉDÉ DE FABRICATION D'ÉLECTRODE

(30) Priority: 24.08.2022 JP 2022133185
(43) Date of publication of application: 28.02.2024
(73) Proprietor: TOYOTA JIDOSHA KABUSHIKI KAISHA, Toyota-shi, Aichi-ken, 471 8571 (JP)
(72) Inventor: KAKISHITA, Kenichi, Toyota-shi, 471-8571 (JP); IKEDA, Yusuke, Toyota-shi, 471-8571 (JP)
(74) Representative: D Young & Co LLP

(56) References cited:
- EP-B1- 1 917 689
- WO-A1-2018/084431
- JP-A- S60 207 245
- JP-B2- 6 729 236

## Description

### BACKGROUND OF THE INVENTION

### 1. Field of the Invention

The present disclosure relates to an electrode for a battery, a battery, and a manufacturing method of the electrode.

### 2. Description of Related Art

Japanese Patent No. 6729236 discloses, in a method for manufacturing a stacked all-solid-state battery, coating an end portion of a laminate made up of a solid electrolyte layer, an active material layer, and a current collector layer, with an insulator coating solution, to seal the end portion of the laminate (forming an insulating sealing portion at the end portion of the laminate) so as to suppress short-circuiting.

### SUMMARY OF THE INVENTION

Improved structural efficiency (capacity per unit volume) is being demanded of batteries. For example, when a material for a sealing portion (insulator coating liquid) is coated on an end portion of a laminate (i.e., an electrode) made up of an active material layer, a current collector layer, and a solid electrolyte layer, there usually occurs a situation in which insulating resin juts out in a laminating direction. Accordingly, in a stacked battery formed by stacking the laminates (electrodes), there is a possibility that thickness of the battery will increase due to the insulating resin (sealing portion) being interposed between the electrodes. Increased thickness of the battery reduces the structural efficiency of the battery.

The present disclosure provides an electrode that can improve the structural efficiency of the battery.

An electrode according to a first aspect of the present disclosure includes a laminate that includes an active material layer and a current collector, and a sealing portion covering an end portion surface of the laminate. The laminate includes two principal faces that face each other, and an end face that is a surface that is different from the two principal faces. The end portion surface includes the end face, and an adjacent face that is a portion adjacent to the end face on each of the two principal faces. The adjacent face includes one or more asperities. The sealing portion includes a first sealing portion covering the end face and a second sealing portion covering at least part of the adjacent face. The second sealing portion is present in one or more recessed portions of the one or more asperities of the adjacent face and does not include a portion higher than a height position of the one or more asperities, the height position being highest in the one or more asperities. The first sealing portion and the second sealing portion are connected.

In the electrode according to the first aspect of the present disclosure, the two principal faces are perpendicular to a laminating direction of the laminate, and the end face is parallel to the laminating direction of the laminate.

A battery according to a second aspect of the present disclosure may include the electrode.

In the battery according to the second aspect of the present disclosure, the battery may be an all-solid-state battery.

According to the electrode of the first aspect of the present disclosure, the sealing portion does not jut out in the laminating direction at the end portion of the laminate that includes the active material layer and the current collector, and accordingly an increase in thickness of the battery due to the sealing portion being interposed between the electrodes is suppressed in a stacked battery obtained by stacking the electrode including the laminate. Thus, the electrode according to the first aspect of the present disclosure can improve structural efficiency of the battery according to the second aspect of the present disclosure.

A manufacturing method according to a third aspect of the present disclosure may be a manufacturing method of the electrode. The manufacturing method of the electrode may include a first step of preparing the laminate including the active material layer and the current collector, a second step of coating a liquid containing a material of the sealing portion on the end portion surface of the laminate, and a third step of shaping the second sealing portion by pressing the laminate in a laminating direction such that the material of the sealing portion is pressed into the one or more recessed portions of the adjacent face. The first step, the second step and the third step may be performed in this order.

According to the manufacturing method of an electrode according to the third aspect of the present disclosure, pressing in the laminating direction enables the electrode according to the first aspect of the present disclosure to be manufactured with no jutting of the sealing portion in the laminating direction at the end portion of the laminate including the active material layer and the current collector. Thus, in the stacked battery obtained by stacking the electrodes, increase in the thickness of the battery due to the sealing portion being interposed between the electrodes is suppressed, and the structural efficiency of the battery according to the second aspect of the present disclosure can be improved.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a flowchart showing manufacturing steps of an electrode according to an embodiment;
FIG. 2A is a schematic sectional view for describing a manufacturing step of the electrode according to the embodiment;
FIG. 2B is a schematic sectional view for describing a manufacturing step of the electrode according to the embodiment;
FIG. 2C is a schematic sectional view for describing a manufacturing step of the electrode according to the embodiment; and
FIG. 3 is a schematic diagram for describing a structure of a battery according to the embodiment.

### DETAILED DESCRIPTION OF EMBODIMENTS

An embodiment of the present disclosure (which may be hereinafter referred to simply as "present embodiment") and examples of the present disclosure (which may be hereinafter referred to simply as "present example") will be described below. It should be noted that the present embodiment and the examples do not limit the technical scope of the present disclosure.

When a compound is represented by a stoichiometric composition formula (e.g., "LiCoO₂" or the like), the stoichiometric composition formula is merely a representative example of the compound. The compound may have a non-stoichiometric composition. For example, when lithium cobalt oxide is represented by "LiCoO₂," lithium cobalt oxide is not limited to a composition ratio of "Li:Co:O = 1:1:2" and can contain lithium (Li), cobalt (Co), and oxygen (O) in any composition ratio, unless otherwise specified. Moreover, doping with a trace element, substitution with a trace element, and so forth, can be allowed.

### Electrode

An electrode for a battery according to the present embodiment includes a laminate that includes an active material layer and a current collector, and a sealing portion that covers an end portion surface of the laminate.

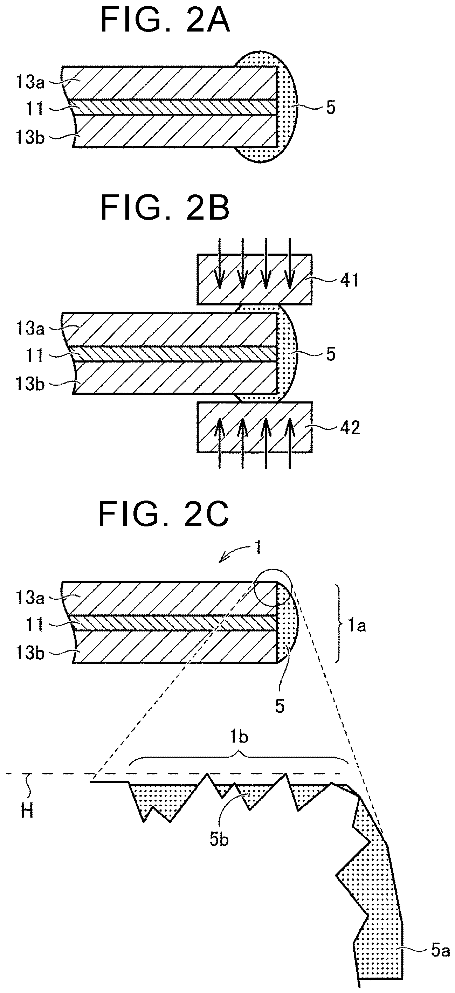

The laminate may be made up of just active material layers 13a and 13b and a current collector 11, as in an electrode (laminate) 1 illustrated in FIG. 2C, for example. In addition to the active material layer and the current collector, the laminate may further include at least one separator layer (solid electrolyte layer) provided in contact with at least one of the active material layer 13a and the active material layer 13b.

The laminate has two opposing principal faces (an upper face and a lower face in FIG. 2C), and an end face 1a which is a surface that is different from the two principal faces. That is to say, the two principal faces are perpendicular to a laminating direction of the laminate, and the end face 1a is parallel to the laminating direction of the laminate.

The end portion surface covered by the sealing portion is made up of the end face 1a and adjacent faces 1b that are portions adjacent to the end face 1a respectively on the two principal faces. Usually, the principal faces have fine one or more asperities, and the adjacent faces 1b have fine one or more asperities.

The sealing portion includes a first sealing portion 5a covering the end face and a second sealing portion 5b covering at least part of the adjacent face.

The second sealing portion 5b is present in one or more recessed portions of the one or more asperities of the adjacent face 1b, and does not have a portion that is higher than the height position H of the one or more asperities that is highest. The height position becomes higher toward an outer side in the laminating direction, in the laminating direction of the laminate.

The first sealing portion 5a and the second sealing portion 5b are connected. Note that in the schematic sectional view (two-dimensional view) in FIG. 2C, the first sealing portion 5a and the second sealing portion 5b are drawn appearing to be separate from each other, but in an actual three-dimensional rendering, the first sealing portion 5a and the second sealing portion 5b are connected in the one or more recessed portions of the adjacent face 1b. A length of the second sealing portion 5b is greater than the thickness of the first sealing portion 5a.

Note that in order to suppress the sealing portion from jutting out in the laminating direction, it is also conceivable to apply a coating liquid 5 to just the end face 1a of the electrode (laminate) 1 and not to apply the coating liquid 5 to the adjacent faces 1b. In this case, increase in thickness of the battery due to jutting of the sealing portion in the laminating direction is suppressed, but there is a possibility that adhesion of the sealing portion will be weak when the only adhesion is between the sealing portion and the end face 1a, and that ensured insulation will be insufficient. On the other hand, in the electrode according to the present embodiment, the sealing portion can be held more firmly at the end portion of the electrode (laminate) 1 by manifestation of an anchor effect of the second sealing portion embedded in the one or more recessed portions of the adjacent face 1b of the electrode (laminate) 1 and connecting to the first sealing portion, while suppressing increase in the thickness of the battery due to the jutting of the sealing portion in the laminating direction. Accordingly, the electrode of the present embodiment is also excellent in terms of ensured insulation.

### Manufacturing Method of Electrode

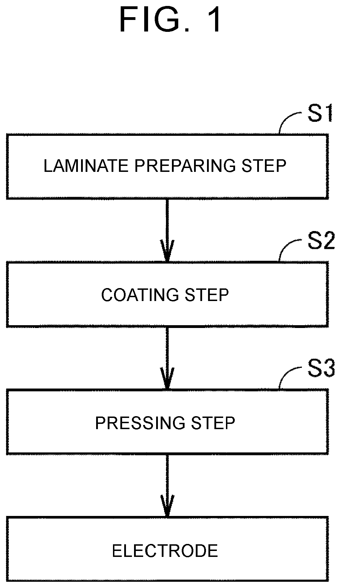

As shown in FIG. 1, the manufacturing method of the electrode according to the present embodiment includes at least a laminate preparation step (S1), a coating step (S2), and a pressing step (S3), in this order.

### Laminate Preparation Step: S1

In the laminate preparation step (S1), a laminate (sheet electrode) including an active material layer and a current collector is prepared. Here, various types of known laminates (sheet electrodes) can be used as components of a stacked battery. Note that as described above, the laminate may further include a separator layer. The laminate that is prepared may be subjected to pressing in the laminating direction (up-down direction in the planes of the drawings in FIGS. 2A, 2B, and 2C) in a state in which the component members are laminated.

### Coating Step: S2

In the coating step (S2), a liquid (coating liquid 5) containing a material for the sealing portion is coated onto the end portion surface of the laminate (see FIG. 2A). The material for the sealing portion is a material capable of exhibiting functions such as suppressing short-circuiting, and is, for example, an insulating resin material, or the like. The liquid (coating liquid 5) is, for example, a slurry containing the material for the sealing portion, or the like. Various known liquids used for insulation of batteries and so forth can be used as the liquid (coating liquid 5) containing the material for the sealing portion.

Note that after the coating step, a step of temporarily drying the coated liquid containing the material for the sealing portion may be performed before the subsequent pressing step. In this case, the extent of drying is preferably regulated such that the material for the sealing portion will be maintained in a state of softness in the pressing step, so that the material for the sealing portion (semi-solidified substance containing the material) can be pressed into the one or more recessed portions of the adjacent faces of the laminate in the pressing step.

### Pressing step: S3

In the pressing step (S3), the second sealing portions 5b are formed by pressing the laminate in the laminating direction so as to press the material for the sealing portion into the one or more recessed portions of the adjacent faces 1b of the laminate (see FIGS. 2B and 2C). Note that the pressing step is performed by mechanical pressure from pressing members 41 and 42 and so forth, for example.

The pressing step may be performed on individual electrodes (sheet electrodes), or may be performed in batch processing on multiple electrodes that are in a stacked state (e.g., a stacked battery). Note that when the pressing step is not performed on individual electrodes but is performed in batch processing on multiple electrodes in a stacked state (e.g., stacked battery), there is a possibility that, when stacking multiple electrodes (sheet electrodes) with portions of the sealing portion jutting out in the stacking direction remaining thereon, misalignment and so forth of electrodes may occur due to the sealing portion jutting out. Such a problem can be circumvented by performing the pressing step on individual electrodes before assembling the battery.

Further, a step of main drying of the material of the sealing portion may be performed after the pressing step. Main drying may be performed on individual electrodes, or may be performed on multiple electrodes that are in a stacked state (e.g., a stacked battery).

The electrode according to the present embodiment can be obtained through the steps as described above.

### Battery

The present disclosure also relates to a battery including the above-described electrode. The battery is a stacked battery, for example, in which multiple electrodes are stacked. The battery may be an all-solid-state battery. Note that in the battery according to the present embodiment, the above-described electrode (the electrode of which the end portion is covered with the sealing portion) may be an anode, a cathode, or both an anode and a cathode.
An example of the battery (all-solid-state battery) according to the present embodiment will be described below.

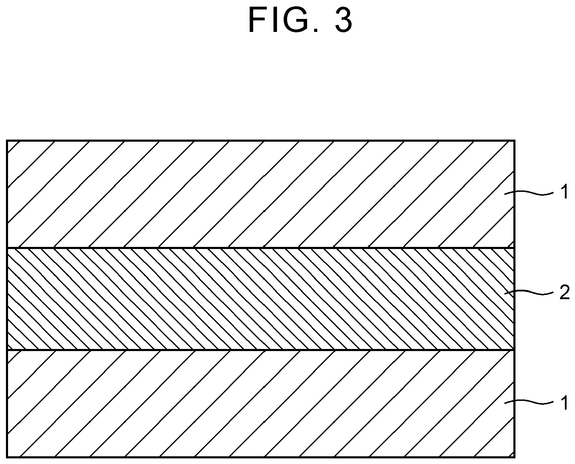

The all-solid-state battery includes a power storage element. As illustrated in FIG. 3, the power storage element includes a cathode (electrode 1), an anode (electrode 1), and a separator layer 2. The cathode includes a cathode current collector and a cathode layer. The anode includes an anode current collector and an anode layer. Note that detailed structures of the cathode, the anode, and the separator layer 2 are omitted from illustration in FIG. 3.

The all-solid-state battery may include, for example, an outer encasement member that houses the power storage element. The outer encasement member may be a pouch or the like that is made of a metal foil-laminated film, for example.

### Anode

The anode includes the anode current collector and the anode layer. The anode has a layer form.

### Anode Current Collector

The anode current collector may include, for example, capper (Cu) foil, nickel (Ni) foil, or the like. The anode current collector may have a thickness of, for example, 5 µm to 50 µm. For example, the anode layer may be formed by coating a surface of the anode current collector with an anode composite material.

### Anode Layer

The anode layer is in close contact with the separator layer 2. The anode layer may have a thickness of 10 µm to 200 µm, for example.

The anode layer may contain anode active material particles and solid electrolyte particles.

Examples of components of the anode active material particles include carbon materials such as graphite, silicon (Si), silicon oxide SiOₓ (0 < x < 2), Li4Ti5O12, and so forth.

The anode active material particles may be secondary particles (aggregate of primary particles). The anode active material particle (secondary particle) may have a D50 (average particle size) of, for example, 1 µm to 50 µm, or may have a D50 of 1 µm to 20 µm, or may have a D50 of 5 µm to 15 µm. The primary particles may have a maximum Feret diameter of, for example, 0.1 µm to 3 µm. Note that "D50" indicates a particle size in which the cumulative frequency in order from the smallest particle sizes reaches 50% in a volume-based particle size distribution. D50 can be measured by laser diffraction.

The components of the solid electrolyte particles used in the anode layer may be the same as or different from the components of the solid electrolyte particles used in the separator layer 2 which will be described later.

The components of the solid electrolyte particles are not limited in particular, and may be any of sulfide solid electrolytes, oxide solid electrolytes, hydroborate solid electrolytes, and so forth.

The sulfide solid electrolyte may contain Sulfur (S) and phosphorus (P). The sulfide solid electrolyte may further contain Li. The sulfide solid electrolyte may further contain, for example, O, Si, and so forth. The sulfide solid electrolyte may further contain, for example, a halogen such as iodine (I), bromine (Br), or the like.

Examples of sulfide solid electrolytes that can be used include LiI-LiBr-Li₃PS₄, Li₂S-SiS₂, LiI-Li₂S-SiS₂, LiI-Li₂S-P₂S₅, LiI-Li₂O-Li₂S-P₂S₅, LiI-Li₂S-P₂O₅, LiI-Li₃PO₄-P₂S₅, Li₂S-P₂S₅, Li₃PS₄, LiCI-LiBr-Li₃PS₄, LiCl-LiBr-Li₂S-P₂S₅, LiCl-LiBr-Li₂S-SiS₂, and so forth.

For example, "LiI-LiBr-Li₃PS₄" represents a sulfide solid electrolyte produced by mixing LiI, LiBr, and Li₃PS₄ at any molar ratio. The sulfide solid electrolyte may be produced by a mechanochemical method, for example. "Li₂S-P₂S₅" includes Li₃PS₄. Li₃PS₄ can be produced by, for example, mixing Li₂S and P₂S₅ in "Li₂S:P₂S₅ = 75:25 (molar ratio)"

Note that the solid electrolyte may be of any type such as argyrodite type, perovskite type, glass ceramics type, or the like.

The surface of the anode active material particles may be coated with, for example, a coating film for suppressing reaction with solid electrolyte particles and so forth.

The anode layer may further contain an electroconductive material, for example. The electroconductive material can form electron-conductive paths in the anode layer. The electroconductive material can contain any component. The electroconductive material may contain, for example, at least one selected from a group consisting of carbon black, vapor-grown carbon fibers (VGCFs), carbon nanotubes (CNTs), and graphene flakes. The amount of the electroconductive material that is contained may be, for example, 0.1 parts by mass to 10 parts by mass, per 100 parts by mass of the anode active material particles.

The anode layer may further contain a binder, for example. The binder can contain any component. The binder may contain, for example, at least one selected from a group consisting of polyvinylidene difluoride (PVDF), a polyvinylidene difluoride-hexafluoropropylene copolymer (PVDF-HFP), styrene butadiene rubber (SBR), and polytetrafluoroethylene (PTFE). The amount of the binder that is contained may be, for example, 0.1 parts by mass to 10 parts by mass, per 100 parts by mass of the anode active material particles.

### Cathode

The cathode includes the cathode current collector and the cathode layer. The cathode has a layer form.

Examples of the cathode current collector include aluminum (Al) foil and so forth. The cathode current collector may have a thickness of, for example, 5 µm to 50 µm. The cathode layer may be formed by coating a surface of the cathode current collector with a cathode composite material, for example.

The cathode layer is in close contact with the separator layer 2. The cathode layer may, for example, have a thickness of 10 µm to 200 µm.

The cathode layer may contain cathode active material particles and solid electrolyte particles.

Examples of components of the cathode active material particles include LiCoO₂, LiNiO₂, LiMnO₂, LiMn₂O₄, Li(NiCoMn)O₂, Li(NiCoAl)O₂, LiFePO₄, Li₂S, P₂S₅, SiS₂, and so forth. Note that "(NiCoMn)" in "Li(NiCoMn)O₂", for example, indicates that a total of composition ratios of the elements in the parentheses is 1. The amounts of the individual components are optional as long as the total is 1. Li(NiCoMn)O₂ may include, for example, Li(Ni_{1/3}Co_{1/3}Mn_{1/3})O₂, Li(Ni_{0.5}Co_{0.2}Mn_{0.3})O₂, Li(Ni_{0.8}Co_{0.1}Mn_{0.1})O₂, and so forth.

The cathode active material particle may be a secondary particle (aggregate of primary particles). The secondary particle of the cathode active material particle may have a D50 of 1 µm to 50 µm, or may have a D50 of 1 µm to 20 µm, or may have a D50 of 5 µm to 15 µm, for example. Primary particles of the cathode active material particle may have a maximum Feret's diameter of, for example, 0.1 µm to 3 µm.

The surface of the cathode active material particles may be coated with, for example, a coating film for suppressing reaction with solid electrolyte particles and so forth.

The components of the solid electrolyte particles used in the cathode layer may be the same as or different from the components of the solid electrolyte particles used in the separator layer 2 which will be described later.

The cathode layer may further contain, for example, a conductive material and a binder. The same conductive material and binder as those of the anode layer can be used as the conductive material and the binder, for example.

The cathode active material particles may be subjected to thermal treatment (baking). The thermal treatment temperature may be, for example, 150°C to 300°C. The thermal treatment time may be, for example, one hour to 10 hours. The thermal treatment may be performed in air, or in an inert atmosphere, for example.

### Separator Layer 2

The separator layer 2 is interposed between the cathode and the anode. The separator layer 2 contains solid electrolyte particles. The solid electrolyte (solid electrolyte particles) used in the separator layer 2 may be of the same type as or different from at least one of the anode layer and the cathode layer.

The separator layer 2 may further contain a binder. The amount of the binder that is contained may be, for example, 0.1 parts by mass to 10 parts by mass, per 100 parts by mass of the solid electrolyte particles.

Note that, as illustrated in FIG. 1 of Japanese Patent No. 6729236, when one of the two electrodes (anode and cathode) is larger in size than the other, the end portion surface (end face and adjacent faces) of the electrode of which the size is larger than the other is provided with a sealing portion (insulating portion), thereby ensuring insulation. The insulating portion is insulating tape or the like. That is to say, in order to suppress short-circuiting, insulation is ensured by insulating tape or the like in the electrode structure. However, when the sizes of the two electrodes are different, the size difference will reduce material density in the battery, and structural efficiency will deteriorate.
On the other hand, when two types of electrodes are made to have the same size in order to improve the structural efficiency, and sealing portions are provided not only on the end faces of the electrodes but also on the adjacent faces to guarantee the close contact of the sealing portions, the sealing portions jutting out in the laminating direction (sealing portions on the adjacent faces) will be interposed between the two types of electrodes, since there is no difference in size between the two types of electrodes. Accordingly, there arises a problem in that the thickness of the stacked battery increases.
Thus, the electrode according to the present embodiment is particularly advantageous in a stacked battery in which two types of electrodes (an anode and a cathode) have the same size, in that increase in the thickness of the battery can be suppressed and the structural efficiency can be improved, while ensuring close contact (insulation) of the sealing portion.

## Claims

1. An electrode (1) for a battery, comprising:
a laminate including an active material layer (13a, 13b) and a current collector (11); and
a sealing portion covering an end portion surface of the laminate, wherein
the laminate includes two principal faces that face each other, and an end face (1a) that is a surface that is different from the two principal faces, wherein the two principal faces are perpendicular to a laminating direction of the laminate, and the end face (1a) is parallel to the laminating direction of the laminate,
the end portion surface includes the end face (1a), and an adjacent face (1b) that is a portion adjacent to the end face (1a) on each of the two principal faces,
the adjacent face (1b) includes one or more asperities,
the sealing portion includes a first sealing portion (5a) covering the end face (1a), and a second sealing portion (5b) covering at least part of the adjacent face (1b),
the second sealing portion (5b) is present in one or more recessed portions of the one or more asperities of the adjacent face (1b) and does not include a portion higher than a height position (H) of the one or more asperities, the height position (H) being highest in the one or more asperities, and
the first sealing portion (5a) and the second sealing portion (5b) are connected.

2. A battery comprising the electrode according to claim 1.

3. The battery according to claim 2, wherein the battery is an all-solid-state battery.

4. A manufacturing method of the electrode (1) according to claim 1, the manufacturing method comprising:
a first step of preparing the laminate including the active material layer (13a, 13b) and the current collector (11);
a second step of coating a liquid (5) containing a material of the sealing portion on the end portion surface of the laminate; and
a third step of shaping the second sealing portion (5b) by pressing the laminate in a laminating direction such that the material of the sealing portion is pressed into the one or more recessed portions of the adjacent face (1b), wherein
the first step, the second step and the third step are performed in this order.

## Patentansprüche

1. Elektrode (1) für eine Batterie, umfassend:
ein Laminat, das eine Aktivmaterialschicht (13a, 13b) und einen Stromabnehmer (11) umfasst; und
einen Dichtungsabschnitt, der eine Endabschnittfläche des Laminats bedeckt, wobei
das Laminat zwei Hauptflächen aufweist, die einander zugewandt sind, und eine Endfläche (1a), die eine von den beiden Hauptflächen verschiedene Oberfläche ist, wobei die beiden Hauptflächen senkrecht zu einer Laminierungsrichtung des Laminats sind und die Endfläche (1a) parallel zu der Laminierungsrichtung des Laminats ist,
die Endabschnittfläche die Endfläche (1a) und eine angrenzende Fläche (1b), die ein Abschnitt ist, der an jeder der beiden Hauptflächen an die Endfläche (1a) angrenzt, umfasst,
die angrenzende Fläche (1b) eine oder mehrere Unebenheiten umfasst,
der Dichtungsabschnitt einen ersten Dichtungsabschnitt (5a), der die Endfläche (1a) bedeckt, und einen zweiten Dichtungsabschnitt (5b), der mindestens einen Teil der angrenzenden Fläche (1b) bedeckt, umfasst,
der zweite Dichtungsabschnitt (5b) in einem oder mehreren vertieften Abschnitten der einen oder der mehreren Unebenheiten der angrenzenden Fläche (1b) vorhanden ist und keinen Abschnitt umfasst, der höher als eine Höhenposition (H) der einen oder der mehreren Unebenheiten ist, wobei die Höhenposition (H) in der einen oder den mehreren Unebenheiten am höchsten ist, und der erste Dichtungsabschnitt (5a) und der zweite Dichtungsabschnitt (5b) miteinander verbunden sind.

2. Batterie umfassend die Elektrode nach Anspruch 1.

3. Batterie nach Anspruch 2, wobei die Batterie eine Festkörperbatterie ist.

4. Herstellungsverfahren für die Elektrode (1) nach Anspruch 1, wobei das Herstellungsverfahren umfasst:
einen ersten Schritt des Herstellens des Laminats einschließlich der Aktivmaterialschicht (13a, 13b) und des Stromabnehmers (11);
einen zweiten Schritt des Aufschichtens einer Flüssigkeit (5), die ein Material des Dichtungsabschnitts enthält, auf die Endabschnittfläche des Laminats; und
einen dritten Schritt des Formens des zweiten Dichtungsabschnitts (5b) durch Pressen des Laminats in einer Laminierrichtung, so dass das Material des Dichtungsabschnitts in den einen oder die mehreren vertieften Abschnitte der angrenzenden Fläche (1b) gepresst wird, wobei
der erste Schritt, der zweite Schritt und der dritte Schritt in dieser Reihenfolge durchgeführt werden.

## Revendications

1. Électrode (1) pour une batterie, comprenant :
un stratifié comprenant une couche de matériau actif (13a, 13b) et un collecteur de courant (11) ; et
une partie d'étanchéification recouvrant une surface de partie d'extrémité du stratifié, dans laquelle
le stratifié comprend deux faces principales se faisant face, et une face d'extrémité (1a) qui est une surface différente des deux faces principales, les deux faces principales étant perpendiculaires à une direction de stratification du stratifié, et la face d'extrémité (1a) étant parallèle à la direction de stratification du stratifié,
la surface de partie d'extrémité comporte la face d'extrémité (1a), et une face adjacente (1b) qui est une partie adjacente à la face d'extrémité (1a) sur chacune des deux faces principales,
la face adjacente (1b) comporte une ou plusieurs aspérités,
la partie d'étanchéification comporte une première partie d'étanchéification (5a) recouvrant la face d'extrémité (1a), et une deuxième partie d'étanchéification (5b) recouvrant au moins une partie de la face adjacente (1b), la deuxième partie d'étanchéification (5b) est présente dans une ou plusieurs parties évidées de la ou des aspérités de la face adjacente (1b) et ne comprend pas une partie supérieure à une position en hauteur (H) de la ou des aspérités, la position en hauteur (H) étant la plus élevée dans la ou les aspérités, et
la première partie d'étanchéification (5a) et la deuxième partie d'étanchéification (5b) sont reliées.

2. Batterie comprenant l'électrode selon la revendication 1.

3. Batterie selon la revendication 2, dans laquelle la batterie est une batterie entièrement à l'état solide.

4. Procédé de fabrication de l'électrode (1) selon la revendication 1, le procédé de fabrication comprenant :
une première étape de préparation du stratifié comportant la couche de matériau actif (13a, 13b) et le collecteur de courant (11) ;
une deuxième étape de revêtement d'un liquide (5) contenant un matériau de la partie d'étanchéification sur la surface de partie d'extrémité du stratifié ; et
une troisième étape de façonnage de la deuxième partie d'étanchéification (5b) par pressage du stratifié dans une direction de stratification de sorte que le matériau de la partie d'étanchéification soit pressé dans la ou les parties évidées de la face adjacente (1b), dans laquelle
la première étape, la deuxième étape et la troisième étape sont réalisées dans cet ordre.
